# EUROPEAN PATENT APPLICATION

(11) **EP 2 330 854 A1**
(43) Date of publication of application: **08.06.2011**
(21) Application number: 09177232.7
(22) Date of filing: 26.11.2009
(51) Int. Cl.: H04W 72/04

(54) **Method, entities, and interface configured for supporting dynamic spectrum management**

(71) Applicant: Nokia Siemens Networks Oy, 02610 Espoo (FI)
(72) Inventor: Horneman, Pers Kari Veikko, 90800 Oulu (FI); Luo, Jijun, 81549 München (DE); Schulz, Egon, 80993 München (DE); Teng, Pers Yong, 100192 Beijing (CN)

(57) **Abstract**

The present invention relates to dynamic spectrum management in radio communications networks. The present invention concerns a method for supporting dynamic spectrum management in a radio communications system, wherein a controlling entity and at least one network entity communicate using an interface, said interface supporting dynamic spectrum management, and wherein said method comprises signalling, between said controlling entity and said at least one network entity, via said interface:
- a request for spectrum resources;
- a reliability information for said spectrum resources, comprising a time information supporting advanced joint designed RRM; and
- a confirmation signal for said permitted spectrum resources.

## Description

Method, entities, and interface configured for supporting dynamic spectrum management

### FIELD OF THE INVENTION

The present invention relates to dynamic spectrum management in radio communications networks. Particularly, the present invention refers to a method configured to support said dynamic spectrum management; a controlling entity configured to support said dynamic spectrum management; a network entity configured to support said dynamic spectrum management; an interface configured to support said dynamic spectrum management; and corresponding computer program products, and data carriers used for said dynamic spectrum management.

### BACKGROUND OF THE INVENTION

As mentioned above, the present invention addresses dynamic spectrum management in radio communications networks.

Flexible Spectrum Use (FSU) within a radio access network (RAN) has been identified as a candidate future technology to allow flexible spectrum allocation among different operators or radio access technologies (RATs).

Under the Dynamic Spectrum Use topic, a number of different schemes have been developed. They are based on the access rights of each system to the shared spectrum. If one system has a priority access to the spectrum over the other, then vertical sharing schemes are applied. If both systems have same access rights to the spectrum then this results in horizontal sharing schemes. Horizontal sharing can be both coordinated and uncoordinated.

FSU can be performed both, in Long Term (LT) and Short Term (ST). In the long term, the spectrum assignment strategy takes advantage of the changing nature of the spectrum availability and the traffic demand in different parts of a multi-operator or multi-RAT environment. The LT scheme assigns the spectrum at a higher level of geographical granularity between multiple RANs. The ST assignment acquires the fine tuning of the spectrum assignment at the cell level. This is performed at shorter time scales, e.g. 100 ms level.

In general, FSU releases spectrum resources from a system with less load and allocate them to a system having concurrently high spectrum demand. Additional spectrum resources contribute to the freedom of radio resource management (RRM).

The goal of FSU is to add additional radio resources to highly load system and to contribute to the freedom of the radio resource management mechanism. However, without schematical interactions between the RRM entities in a communications system and the FSU controlling entity will not result in efficient spectrum use.

In addition, uncoordinated spectrum allocation results in a mass of spectrum use, which causes interferences to the participants in the radio environment. A level of control given by the Operation and maintenance (O&M) subsystem is needed.

Interfaces between RRM entity and O&M entity supporting dynamic spectrum management in current communication systems such as LTE, UTRAN, etc, are still absent (see, e.g., 3GPP 36.300, E-UTRAN & E-UTRAN overall description, 2008-03). The current O&M Centre (OMC) manages static spectrum allocation, only (see, e.g., 3GPP 36.331, E-UTRAN Radio resource control (RRC), 2008-03) .

Current interface between OMC and other network elements are over the standardized O-Interface with very static functions: administration of the subscribers and equipment, billing, generation of statistical data, capability control, etc. (see, e.g., 3GPP 24.800, Telecommunication management, Management level procedures and interaction with UTRAN). It has been identified that aggregation of spectrum segments gives radio resource management gains (see, e.g., J. Luo, etc., Investigation on Radio Resource Scheduling in WLAN Coupled with 3G Cellular Network, IEEE Communication Magazine, June, 2003) .

Thus, here is still a need for improved spectrum allocation in high-load radio communications systems.

### SUMMARY OF THE INVENTION

Object of the present invention is improving spectrum allocation in high-load radio communications systems.

This object is achieved by a method for supporting dynamic spectrum management in a radio communications system comprising features according to claim 1, a controlling entity comprising features according to claim 2, a network entity comprising the features according to claim 3, an interface comprising the features according to claim 4, a computer program product comprising features according to claim 5, and a data carrier comprising features according to claim 6.

Further embodiments of the present invention are provided with the corresponding dependent claims.

The object of the present invention is achieved by a method for supporting dynamic spectrum management in a radio communications system, wherein a controlling entity and at least one network entity communicate using an interface, said interface supporting dynamic spectrum management, and wherein said method comprises signalling, between said controlling entity and said at least one network entity, via said interface:
- a request for spectrum resources;
- a reliability information for said spectrum resources, comprising a time information supporting advanced joint designed RRM; and
- a confirmation signal for said permitted spectrum resources.

Thus, a solution of providing tight interactions between the RRM entities and the FSU controlling units enabling accurate spectrum resource allocation is proposed.

The object of the present invention is further achieved by a controlling entity configured to exchange signalling in a radio communications system using an interface, said interface supporting dynamic spectrum management, and said signalling comprising:
- a request for spectrum resources;
- a reliability information for said spectrum resources, comprising a time information supporting advanced joint designed RRM; and
- a confirmation signal for said permitted spectrum resources.

The object of the present invention is further achieved by a network entity configured to exchange signalling in a radio communications system using an interface, said interface supporting dynamic spectrum management, said signalling comprising:
- a request for spectrum resources;
- a reliability information for said spectrum resources, comprising a time information supporting advanced joint designed RRM; and
- a confirmation signal for said permitted spectrum resources.

The object of the present invention is further achieved by an interface in a radio communications system configured to support dynamic spectrum management, said interface further configured to support signalling between a controlling entity and a network entity, said signalling comprising:
- a request for spectrum resources;
- a reliability information for said spectrum resources, comprising a time information supporting advanced joint designed RRM; and
- a confirmation signal for said permitted spectrum resources.

The object of the present invention is further achieved by a computer program product comprising a code, the code being configured to implement a method according to claim 1, and a data carrier comprising a computer program product according to claim 5.

### BRIEF DESCRIPTION OF THE DRAWINGS

The present invention will be more clearly understood from the following description of the preferred embodiments of the invention read in conjunction with the attached drawings, in which:
Fig. 1 gives a general overview of the architecture and interfaces supporting the Radio Access Network (RAN) supporting FSU, where the FSU decision making is accurate and efficient thanks to the interfaces introduction;
Fig. 2 shows an indication vector for a reliability factor and time information;
Fig. 3 shows labelled spectrum resources for acknowledgement messages from different OAM proxies; and
Fig. 4 shows a message sequence chart for inter BS signalling with different OAM proxies.

### DESCRIPTION OF THE PREFERRED EMBODIMENTS

In following the embodiments of the present invention are provided exemplary with regard to an LTE radio communications system. Here, it has to be noted that the present invention is not restricted to application in LTE radio communications systems only and that the present invention can be used accordingly also in further types of communications networks, in which spectrum allocation is performed.

The invention is based on the architecture of the RAN(s) supporting FSU, both for intra-operator, inter-RAT and inter-operator cases. The presented interfaces between FSU unit and RRM entity disclosed in the following carry signalling supporting accurate spectrum resource allocation, in time broadcasting and call handling, advanced RRM based on services characteristics and reliability information of the shared spectrum resources.

The signalling between OAM system and RRM entity, e.g. eNB in LTE, supporting accurate spectrum resource allocation is exchanged via an interface, said signalling comprising:
- request of spectrum resources
- reliability of the flexible spectrum resource
- confirmation signal for the permitted spectrum ranges from OMC/OAM proxy to the RRM entity
- time information added to the reliability information supporting advanced joint designed RRM: for instance, hide spectrum segment information when the it has lower reliability

The signalling can be placed between OMC (the O&M centre) or a proxy to the OAM system that controls the allocation of spectrum, and the RRM entity, e.g. the base station (BS) in the LTE system.

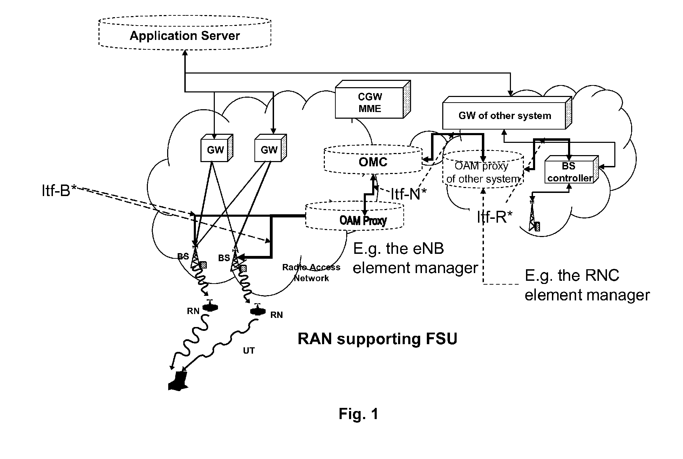

Fig. 1 gives a general overview of the architecture and interfaces supporting the Radio Access Network (RAN) supporting FSU, where the FSU decision making is accurate and efficient thanks to the interfaces introduction.

In Fig. 1, the proposed interfaces Itf-B*, Itf-N*, Itf-R* are presented in bold form. They are not necessarily new interfaces added to the current commercial system, but added signalling to the existing interfaces. Detailed explanations are as follows:
- Itf-B*: the interface between the RRM entity and its element manger integrated into the OAM proxy, when the RRM entity is the eNB (Evolved NodeB).
- Itf-R*: interface between RRM entity and OAM proxy, when the RRM entity is a BS controller, e.g., RNC
- Itf-N*: interface between OMC and the OAM proxy

Spectrum management is divided into two levels, the short term resource allocation is allocated to the OAM proxy, and the long term is allocated to the OMC, as depicted in Fig. 1. When only the OAM proxy is in charge of the spectrum allocation, the Ift-N* interface remains as reporting and acknowledgement functions.

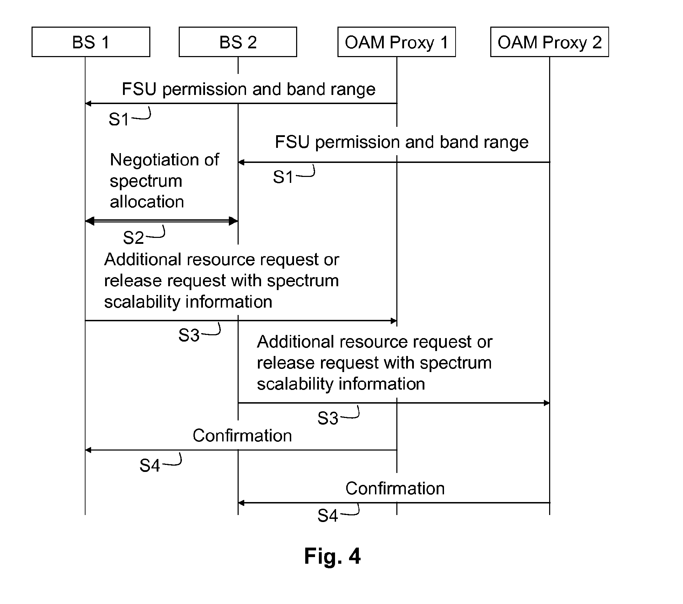

Inter-BS FSU can be coordinated by the OAM proxy. However, when the BSs are controlled by different element managers, the inter-BS interface becomes active for optimal resource allocation recalculation. Results of the spectrum allocation will be confirmed by individual OAM proxy. However, the spectrum allocation will be only executed after both BSs received their OAM proxy's confirmation message, see Fig. 4 (message sequence chart for inter-BS signalling).

Layer 3 (L3) RRM functions trigger the FSU executions. A typical RRM function in L3 is the handover mechanism. The handover rate and call handling measurements should be carried out by the inter-BS interface, e.g. the X2 interface between eNBs, in order to trigger spectrum sharing between neighbouring BSs or inter-mode BSs. The RRM functions located in the BS is operated at the inner loop of the control mechanism, and spectrum management is outer loop.

The inner-loop handover performance and call handling performance (call dropping rate/rejection rates/guaranteed QoS in terms of delay and throughput) are the triggers from inner loop mechanism that applies for outer-loop changes.

Each BS observes its traffic load *L*(*t*) and evaluates it traffic intensity measured by the arrival rate λ*ᵢ*(*t*) and the service processing rate µ*ᵢ*(*t*) for all kind of services existing in the system at time instance *t*, where *i* represents one service class. According to the dynamic features of individual values ^{∂*L*}/_{∂*t*},^{∂λ*i*}/_{∂t} and ^{µ*i*}/_{∂}*ₜ,* the BS will be able to predict its spectrum resources. That will result in estimated future spectrum resource demand.

The following cases are differentiated:
- BSs having HCS (hierarchy cell structure) deployment structure controlled by the same OAM
   o The HCS level is understood as e.g. wide area and local area, where wide area BS is considered as high level BS; local area BS is considered as lower level BS
   o In this case, the optimal calculation is performed by the umbrella cell. Then it applies through OAM proxy for spectrum allocation decision
- BSs having same level of deployment hierarchy and controlled by the same OAM proxy
   o In this case, the system will rely on the OAM proxy to calculate the optimal spectrum allocation pattern
- BSs having the same level of deployment hierarchy level but controlled by different OAM proxies
   o In this case, OAM proxies will negotiate between each other and confirmed by its own OAM proxy through individual Itf-B* or Itf-R* interface (see Fig. 4)
- BSs having HCS (hierarchy cell structure) deployment structure but controlled by the different OAM proxies
   o In this case, the optimal calculation is performed by the umbrella cell. Then it applies through its own OAM proxy and the lower level BSs for spectrum allocation decision through its own OAM proxy
- Inter-operator cases are described later

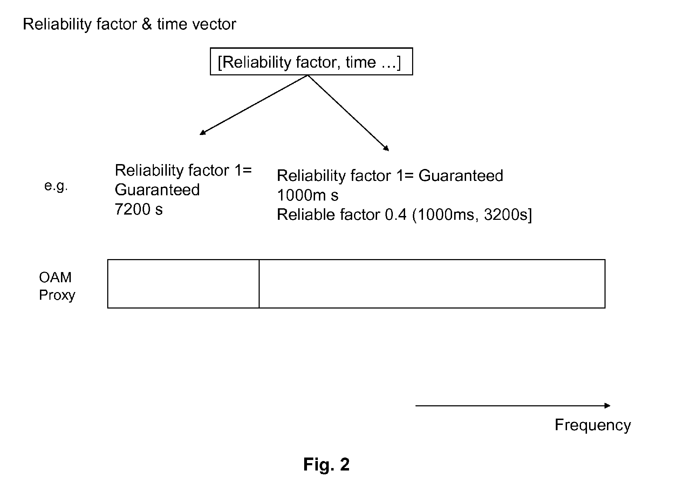

As depicted in Fig. 2, the time instance and reliability information is carried by the interfaces between FSU unit and RRM entity.

Reliability factor varies between the range (0, 1], where "1" denotes an exclusive allocation to the BS, therefore no collision caused by co-channel interface from co-located BSs is expected.

The time and reliability factor information are used by the RRM entity for optimal call handling, e.g. admission and handover and scheduling different services.

In addition, the RRM functions such as the congestion control/load control/handover should be configured with different rate. For instance:
- Increase the handover measurement rate directly after newly available spectrum resources assigned
- Reduction of the congestion/load control rate to be reduced in the long run for the serving system, due to increased capacity.

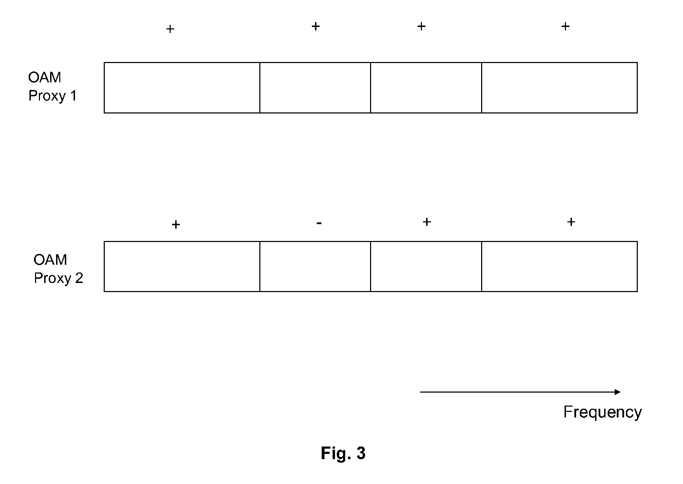

Confirmation messages from different OAM proxies can be different due to differently controlled BSs that have different radio environment. The OAM proxies do not necessarily confirm all the requests from its RRM entities. The spectrum pieces are labels by the OAM proxy and sent to the corresponding RRM entities, as depicted in Fig. 3.

Label "+" means confirmation. Label "-" denotes rejected. To reduce time for negotiation, the BS will start with implementing the allocation of the spectrum that is both labelled by "+". In the mean time, BS can still negotiate or scout for additional resources.

After receiving additional spectrum resources, the BS broadcasts the concurrent available spectrum resource from a previously assigned SIB (System Information Block). However, the broadcasting message does not need to carry complete spectrum information. It is recommended only to broadcast the guaranteed spectrum resources.

The non-broadcasted resources are usually characterized as less reliable, and are used for non real time data services, which are inter-frequency handed-over after the call admission.

Broadcasting of the guaranteed spectrum segment information should be switched off before the expiration of the ending time.

Fig. 4 shows an example of an intra-operator case with different OAM proxy controlling sharing BSs. The example involves two base stations BS 1, BS 2 and two OAM proxies OAM proxy 1, OAM proxy 2.

In a first step S1, FSU permission and band range information is signaled from OAM proxy 1 to BS 1 and from OAM proxy 2 to BS 2.

In a second step S2, signaling with regard to negotiation of spectrum allocation is exchanged between BS 1 and BS 2.

In a third step S3, an additional resource request or release request with spectrum scalability information is signaled from BS 1 to OAM proxy 1 and from BS 2 to OAM proxy 2.

In a fourth step S4, a confirmation is signaled from OAM proxy 1 to BS 1 and from OAM proxy 2 to BS 2.

Inter-operator cases can be performed either by the inter-operator OMC interface, where only spectrum demand, etc. information are exchanged; or direct inter BS interface, which needs early agreement between operators on the allowed re-allocable spectrum resources.

For long term FSU and especially for large scale networks, OMC may take over the central control function. In this case, the OAM proxy works fairly transparently in terms of only implementing the OMC's FSU decision.

OMC and the OAM proxy have to perform frequency negotiation or allocation while considering the BS capabilities. When the BS is not able to access the spectrum band due to e.g. RF limitation, the O&M system will ignore that band for negation or allocation.

General advantages of the presented method include:
- High performance in terms of low call dropping rate and low interruption time in the U-plan (one of the key factors for IMT A system)
- High spectrum efficiency by providing spectrum to the most wanted service
- Saving OPEX in spectrum planning
- Saving CAPEX in reducing manual re-configuration of the network equipments
- Reliable network: since the spectrum allocation decision is kept in the OMC entity or the proxy entities of the OAM, spectrum allocation to individual RAT will be more reliable to the whole radio environment that keeps high efficiency of the system level, e.g., reduction of radio out-band emission
- High spectrum efficiency thanks to the jointly designed RRM

### List OF ABBREVIATIONS:

- BS: Base station
- eNB: evolved NodeB
- HCS: Hierarchy Cell Structure
- Ift: interface
- LT: Long term
- MSC: Message sequence chart
- O&M: Operation and maintenance
- OMC: O&M Centre
- RAT: Radio Access Technology
- RNC: Radio network controller
- RRM: radio resource management
- SIB: System information Block
- ST: Short term
- USP: Unique selling proposition

## Claims

1. A method for supporting dynamic spectrum management in a radio communications system, wherein a controlling entity and at least one network entity communicate using an interface, said interface supporting dynamic spectrum management, and wherein said method comprises signalling, between said controlling entity and said at least one network entity, via said interface:
- a request for spectrum resources;
- a reliability information for said spectrum resources, comprising a time information supporting advanced joint designed RRM; and
- a confirmation signal for said permitted spectrum resources.

2. A controlling entity configured to exchange signalling in a radio communications system using an interface, said interface supporting dynamic spectrum management, said signalling comprising:
- a request for spectrum resources;
- a reliability information for said spectrum resources, comprising a time information supporting advanced joint designed RRM; and
- a confirmation signal for said permitted spectrum resources.

3. A network entity configured to exchange signalling in a radio communications system using an interface, said interface supporting dynamic spectrum management, said signalling comprising:
- a request for spectrum resources;
- a reliability information for said spectrum resources, comprising a time information supporting advanced joint designed RRM; and
- a confirmation signal for said permitted spectrum resources.

4. An interface in a radio communications system configured to support dynamic spectrum management, said interface further configured to support signalling between a controlling entity and a network entity, said signalling comprising:
- a request for spectrum resources;
- a reliability information for said spectrum resources, comprising a time information supporting advanced joint designed RRM; and
- a confirmation signal for said permitted spectrum resources.

5. A computer program product comprising a code, the code being configured to implement a method according to claim 1.

6. A data carrier comprising a computer program product according to claim 5.
